# EUROPEAN PATENT APPLICATION

(11) **EP 0 843 427 A1**
(43) Date of publication of application: **20.05.1998**
(21) Application number: 97850151.8
(22) Date of filing: 29.10.1997
(51) Int. Cl.: H04B 15/00

(54) **An arrangement for suppressing harmonic interference in signal transmission**

(30) Priority: 31.10.1996 SE 9603982
(71) Applicant: AB Transistor, 100 28 Stockholm (SE)
(72) Inventor: Ahgren, Ragnar, 741 31 Knivsta (SE); Oliveby, Christer, 127 49 Skärholmen (SE)
(74) Representative: Örtenblad, Bertil Tore

(57) **Abstract**

An arrangement for suppressing periodic interferences in the transmission of signals from a signal source within a specific frequency range (2). The arrangement includes a signal emitting element that is subjected to interference or disturbance, such as a telecoil (8) or microphone (12), for instance. The signal source is coupled to a comb filter (9 and 15) of the stop-band type, which is adapted so that the stop band (1) of the filter coincides with the fundamental of the periodic interference and its harmonics within the frequency range (2) of the desired signal. The stop band has a bandwidth which is so small that the character of the desired signal will be influenced only to a negligible extent. The comb filter is implemented with the aid of a digital signal processor (9) of known design. This signal processor can be programmed to establish any occurrent periodic interference that includes harmonics and adapt the stop band of the comb filter (9 and 15) with respect to these harmonics.

## Description

The present invention relates to an arrangement for suppressing periodic intereference or disturbance in the transmission of signals in a specific frequency range from a signal source, wherein the signal source may be a signal emitter subjected to interference or disturbances, such as a telecoil or microphone, for instance. The transmission of speech and music in teleloops within the audio frequency range are examples of such signal transmissions. The teleloop is normally supplied with a signal stream that corresponds to the signal to be transmitted, this signal stream generating a magnetic field within the loop. The magnetic field varies in time with the transmitted signal and can be received with the aid of a telecoil connected to an amplifier. The output of the amplifier may be connected to a telephone receiver. This type of signal transmission is typical in the case of telephone receivers and other acoustic auxiliaries or aids for persons whose hearing is impaired. Teleloops are therefore found as auxiliary aids in homes and in the majority of public places, to satisfy the need for adaptation with respect to persons whose hearing is impaired or defective. The drawback with this transmission method is found in the network noise that is constantly present in places, or rooms, that contain electrical installations. The telecoil picks-up the interference field, or disturbance field, from the electrical conductors and the noise is mixed with the desired signal. The noise is, in many cases, so disturbing as to make comfortable listening impossible or extremely tiring.

The invention is based on the use of comb filters of the stop-band type. The use of stop-band filters to exclude an individual interference frequency is a very obvious solution and has been applied in many different contexts. In addition to containing fundamentals, the majority of periodic interferences also include a plurality of harmonics, as is the case with network interference from electrical installations. The comb filter used in accordance with the present invention is a stop-band filter and is characterized in that the stop band of the filter coincides with the fundamental of the periodic interference and its harmonics within the frequency range of the desired signal; and in that the stop band has such a small bandwidth as to only negligibly influence the character of the desired signal. The comb filter is implemented with the aid of a digital signal processor of known design.

In this case, a comb filter of the stop-band type must have a characteristic that for each individual harmonic will ensure that the suppressed bandwidth? will be so narrow as to solely attenuate the undesirable harmonic to the interference frequency. This is necessary in order not to influence the spectrum of the desired signal in such a way as to unacceptably change the character of the signal. For instance, the stop-band filter may not cause the discernability and character of a speech signal to be impaired. It has earlier been difficult, and therefore expensive, to implement a stop-band type comb filter that has these properties. In present times, small, fast digital signal processors can be acquired at reasonable costs and used to implement different types of filter functions. These components belong to present-day technology.

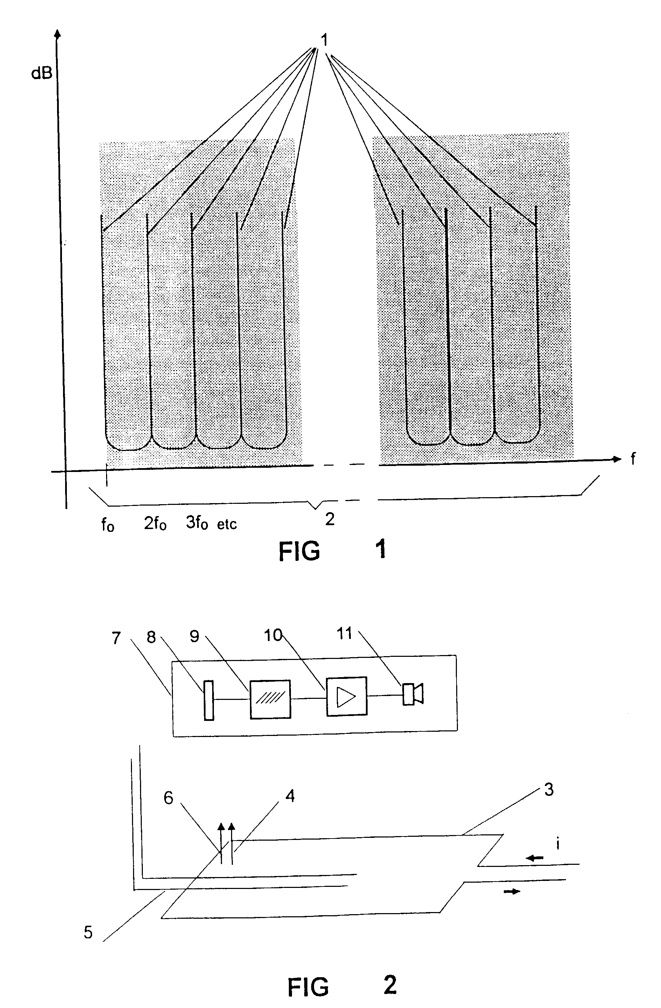

An example of a stop-band type comb filter is shown in Figure 1. f₀ constitutes the fundamental of the interference and the stop band 1 returns on each even and odd harmonic within the frequency range 2 that is included by the spectrum of the desired signal. The bandwidth 2 may be limited to 8 kHz in respect of speech signals, whereas good music reproduction requires a bandwidth of up to 20 kHz. The example shown in Figure 1 includes a speech channel having a bandwidth 2 = 8 kHz and the fundamental f₀ of the interference = 50 Hz or equal to mains frequency in Europe. Thus, up to 160 stop bands 1 may be found within the bandwidth 2 of the illustrated desired signal of the illustrated example. The number of stop bands required is decided by the harmonic contents of the interfering periodic signal. The bandwidth of the stop band need not be greater than 1 Hz and is determined by the sampling method applied in the digital signal processor. The sampling method is controlled, in turn, by the software installed in the software memory circuit of the signal processor.

Figure 2 shows an example of the application of a comb filter that has a stop-band function to reduce periodic interference. The teleloop 3 generates a magnetic field 4 which varies in keeping with the transmitted signal, which may be a speech signal. Electric conductors 6 in the local installation give rise to an interference field 6 which is superimposed on the magnetic field 4 of the desired signal. An inductive receiver 7 is used to receive the desired signal. This inductive receiver includes a telecoil 8 in which the combined magnetic fields 4 and 6 are induced by an electric signal. This signal is normally delivered directly to an amplifier 10 which, in turn, supplies a telephone receiver 11, for instance. The desired signal will be subjected to mains noise interference in this case. This noise disturbance is reduced to an undiscernible level by coupling a comb filter 9 between the telecoil 8 and the amplifier 10, without auditorially influencing the quality of the desired signal. Such teleloops form an important auxiliary aid for all persons whose hearing is impaired or defective, and the invention provides considerable improvement in transmission quality.

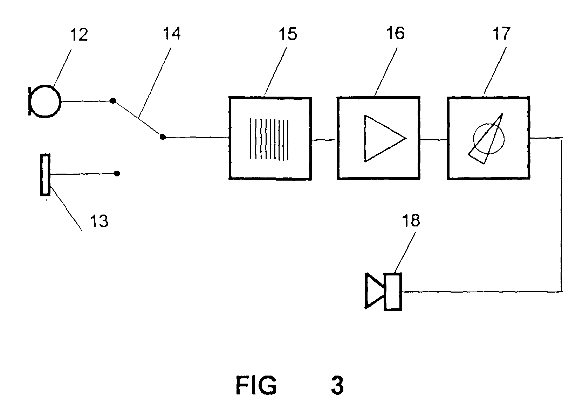

All hearing aids that are sold at present include a telecoil for receiving signals from a teleloop. The principle of such a hearing aid is shown in Figure 3. The block schematic shows the microphone 12, the telecoil 13 and the switch 14 for switching between the microphone and telecoil to the input of the amplifier 16, whose output is connected to the telephone receiver 18 via a sound volume control 17. Provided upstream of the input to the amplifier 16 is a stop-band type comb filter 15 for reducing mains noise in a telecoil mode. The geometrical size of the components of hearing apparatus, particularly headsets, are of great importance, and consequently the comb filter is designed as a special circuit of small dimensions. In an alternative embodiment, the telecoil 13 and the comb filter 15 are accommodated in a separate unit that can be connected to the hearing apparatus galvanically. Many hearing apparatus are equipped with galvanic inputs. Current is supplied to the separate unit either from a battery built into said unit or from the battery belonging to the hearing apparatus itself.

In the case of a microphone connection, the digital signal processor 15 that gives a comb-filter function of a stop-band character can be provided with software that will enable the signal processor to perform a frequency analysis and to establish the nature of any periodic, acoustic interference that may have been taken-up by the microphone 12. With knowledge of the nature of the acoustic interference, the software adapts the comb filter function for maximum suppression of the interference. The frequency analysis is repeated at recurrent intervals, thereby enabling the comb filter function to be adapted to the periodicity of the interference even when this varies with time. This type of suppression of periodic acoustic interference contributes towards facilitating or, in more difficult cases, towards enabling speech communication to be achieved with the aid of such hearing aid-like amplifiers as those shown in Figure 3 when provided with an adaptive comb filter of the stop-band type. Speed-related fan noise or noise from sawing machines are examples of periodic acoustic interference.

## Claims

1. An arrangement for suppressing periodic interferences in the transmission of signals from a signal source within a specific frequency range, said arrangement including a device which emits a signal that is the subject of interference, such as a telecoil (8) or microphone (12), **characterized** in that the signal source is connected to a comb filter (9 and 15) of a stop-band type which is adapted so that the stop band (1) of the filter coincides with the fundamental of the periodic interference and the harmonics of said interference within the frequency range (2) of the desired signal; and in that the bandwidth of the stop band is so small as to only influence the character of the desired signal to a negligible extent; and in that the comb filter is implemented with the aid of a digital signal processor (9) of known design.

2. An arrangement according to Claim 1, **characterized** in that the comb filter (15) is implemented with the aid of a digital signal processor in a compact design, or integrated with the amplifier (16) present in the arrangement for accommodation in a hearing headset.

3. An arrangement according to Claims 1 and 2, **characterized** in that the software of the digital signal processor (15) includes routines for regular analysis of the interfered signal such as to establish the occurrence of any periodic interference containing harmonics and for configuring the comb filter for maximum suppression of the interference on the basis of these harmonics.

4. An arrangement according to Claim 2, **characterized** in that the telecoil (13) and the comb filter (15) are accommodated in a separate unit which is so adapted as to enable it to be connected galvanically to hearing apparatus that includes a galvanic input; and in that the separate unit is supplied with current either from a built-in battery or from the battery belonging to the hearing apparatus.
